# EUROPÄISCHE PATENTANMELDUNG

(11) **EP 4 763 559 A1**
(43) Veröffentlichungstag der Anmeldung: **24.06.2026**
(21) Anmeldenummer: 24221366.8
(22) Anmeldetag: 19.12.2024
(51) Int. Cl.: B60K 1/04

(54) **BEFESTIGUNGSSTRUKTUR**

(71) Anmelder: MAGNA STEYR Fahrzeugtechnik GmbH & Co KG, 8041 Graz (AT)
(72) Erfinder: ERLACHER, Manuel, 9545 Radenthein (AT); LIENHART, Christian, 8054 Seiersberg (AT); SCHWARZL, Werner, 8301 Laßnitzhöhe (AT); STADLER, Severin, 5350 Strobl (AT)
(74) Vertreter: Zangger, Bernd

(57) **Zusammenfassung**

Eine Befestigungsstruktur zur Befestigung einer Hochvoltbatterie in einem Kraftfahrzeug, umfassend ein Batteriegehäuse (1) der Hochvoltbatterie und zumindest einen Schweller (2) des Kraftfahrzeugs, wobei das Batteriegehäuse (1) mittels mehrerer Verschraubungen (3) am Schweller (2) des Kraftfahrzeuges befestigt ist, wobei das Batteriegehäuse (1) zusätzlich mittels mehrerer unverschraubter, also axial nicht fixierter Bolzen (4) am Schweller (2) befestigt ist, sowie ein Verfahren zur Montage einer Hochvoltbatterie in einem Kraftfahrzeug mittels einer solchen Befestigungsstruktur.

## Beschreibung

### Gebiet der Erfindung

Die vorliegende Erfindung betrifft eine Befestigungsstruktur zur Befestigung einer Hochvoltbatterie in einem Kraftfahrzeug und ein Verfahren zur Montage einer Hochvoltbatterie in einem Kraftfahrzeug mittels einer solchen Befestigungsstruktur.

### Stand der Technik

Es ist bekannt, dass Hochvoltbatterien in Kraftfahrzeugen verwendet werden, um elektrische Energie für einen Antriebsmotor eines Kraftfahrzeugs, insbesondere in Elektro- oder Hybridfahrzeugen, zur Verfügung zu stellen. Hochvoltbatterien nehmen ein relativ großes Volumen ein, um eine möglichst hohe Speicherkapazität aufweisen zu können und werden daher möglichst platzsparend, beispielsweise im Bereich des Fahrzeugbodens, verbaut.

Insbesondere ist es bekannt, eine Hochvoltbatterie unterhalb einer Bodenplatte eines Kraftfahrzeugs anzuordnen und an den seitlichen Schwellern, also Längsträgern des Kraftfahrzeugs zu befestigen. Die Antriebsbatterien werden in der Montage von unten, mittels Schrauben an den Schwellern verschraubt. Dazu sind die Muttern der Schrauben üblicherweise im Schweller angeordnet.

Aus der US 10,603,998 B2 ist eine Batteriebefestigungsstruktur zur Befestigung einer Batterie unter einer Bodenplatte eines Fahrzeugs bekannt. Die Batteriebefestigungsstruktur umfasst ein Batteriepaket, das unter einem Bodenblech einer Fahrzeugkabine angebracht ist; ein Fahrzeugkarosserierahmenelement, mit dem ein in horizontaler Richtung verlaufender Endabschnitt des Bodenblechs verbunden ist; und ein Dichtungselement, das elastisch ist und einen Spalt zwischen dem Batteriepaket und dem Fahrzeugkarosserierahmenelement verschließt.

### Zusammenfassung der Erfindung

Es ist eine Aufgabe der Erfindung, eine Befestigungsstruktur zur Befestigung einer Hochvoltbatterie in einem Kraftfahrzeug anzugeben, die eine schnelle und kostengünstige Montage und eine zuverlässige Befestigung der Hochvoltbatterie ermöglicht. Eine weitere Aufgabe der Erfindung ist es, ein schnelles und kostengünstiges Verfahren zur Montage einer Hochvoltbatterie in einem Kraftfahrzeug mittels einer zuverlässigen Befestigungsstruktur anzugeben.

Die Lösung der Aufgabe erfolgt durch eine Befestigungsstruktur zur Befestigung einer Hochvoltbatterie in einem Kraftfahrzeug, umfassend ein Batteriegehäuse der Hochvoltbatterie und zumindest einen Schweller des Kraftfahrzeugs, wobei das Batteriegehäuse mittels mehrerer Verschraubungen am Schweller des Kraftfahrzeuges befestigt ist, wobei das Batteriegehäuse zusätzlich mittels mehrerer unverschraubter, also axial nicht fixierter Bolzen am Schweller befestigt ist.

Erfindungsgemäß wird somit eine Hochvoltbatterie an einem Schweller, bevorzugt an beiden seitlichen Schwellern eins Kraftfahrzeuges, nicht ausschließlich mittels Schrauben befestigt, sondern an manchen Positionen, anstatt der Schrauben, mit Bolzen, die nicht verschraubt sind. Die Bolzen sind als nicht mittels Schraubenmuttern oder ähnlichem axial fixiert, sondern sind in axialer Richtung, bevorzugt in Z-Richtung des Kraftfahrzeugs, im Wesentlichen frei beweglich, also axial schwimmend gelagert, so dass eine axiale Bewegung zwischen Batteriegehäuse und Schweller im Bereich der Bolzen möglich ist.

Üblicherweise sind Antriebsbatterien in einem Fahrzeugunterboden mit vielen einzelnen Verschraubungen befestigt. Das erfordert jedoch viel Befestigungsmaterial und erhöhte Montagezeit. Für eine zuverlässige Befestigung der Hochvoltbatterie am Kraftfahrzeug ist jedoch eine geringere Anzahl von Fixierungen in vertikaler Richtung ausreichend, so dass weniger Befestigungspunkte in Z-Richtung des Fahrzeuges erforderlich sind als in X- und Y-Richtung. Durch eine Reduzierung der Schraubpunkte und den Einsatz von Bolzen, insbesondere Zentrierbolzen, kann der Montageaufwand einer Hochvoltbatterie reduziert werden, bei gleichzeitig zuverlässiger Befestigung der Batterie.

Weiterbildungen der Erfindung sind in den abhängigen Ansprüchen, der Beschreibung sowie den beigefügten Zeichnungen angegeben.

Vorzugsweise sind die Bolzen mit dem Batteriegehäuse oder mit dem Schweller fest gefügt und am anderen Bauteil, also am Schweller oder am Batteriegehäuse, jeweils abschnittsweise, also in einem axialen Abschnitt des jeweiligen Bolzens, in einem Aufnahmeelement ohne Gewinde, insbesondere einer Hülse, angeordnet.

Die Verschraubungen sind jeweils abschnittsweise in einem Aufnahmeelement mit Gewinde, insbesondere einer Schraubenmutter, angeordnet und durch dieses Aufnahmeelement verschraubt. Das Aufnahmeelement ist jeweils bevorzugt im Inneren des Schwellers angeordnet.

Bevorzugt sind die Verschraubungen und/oder die Bolzen jeweils abschnittsweise derart in Hülsen gelagert, dass sie einen Toleranzausgleich in einer Ebene normal auf die Hülse, also normal auf die Bolzen und/oder Schrauben, durchführen können. Ein Toleranzausgleich kann somit bevorzugt in horizontaler Ebene, also in X- und Y-Richtung des Kraftfahrzeuges erfolgen.

Vorzugsweise sind die Bolzen abwechselnd mit den Verschraubungen entlang des Schwellers angeordnet, wobei besonders bevorzugt die Verschraubungen in einer Linie angeordnet sind und die Bolzen jeweils abwechselnd zwischen den Befestigungspunkten in der selben Linie angeordnet sind. Bevorzugt ist jeweils zumindest eine solche Linie von abwechselnd Verschraubungen und Bolzen an jedem der beiden Schweller, an beiden Seiten des Batteriegehäuses, ausgebildet.

Gemäß einer bevorzugten Ausführungsform sind die Bolzen am Batteriegehäuse verschweißt und sind besonders bevorzugt in Z-Richtung nach oben ausgerichtet, stehen also nach oben hin ab.

Der Schweller besteht bevorzugt aus Aluminium. Die Bolzen bestehen in dieser Ausführungsform bevorzugt ebenfalls aus Aluminium. Bevorzugt bestehen die Aufnahmeelemente ohne Gewinde für die Bolzen, insbesondere die Hülsen, aus Stahl. Besonders bevorzugt sind mehrere Hülsen auf einem gemeinsamen Stahlstreifen aufgeschweißt. Der Stahlstreifen kann zwischen dem Schweller und den Aufnahmeelementen angeordnet sein.

Gemäß einer weiteren bevorzugten Ausführungsform sind die Bolzen am Schweller verschweißt und sind bevorzugt in Z-Richtung nach unten ausgerichtet, stehen also nach unten hin ab.

Bevorzugt besteht der Schweller, vorzugsweise in dieser Ausführungsform mit nach unten abstehenden Bolzen, aus Stahl und/oder bestehen die Bolzen aus Stahl.

Die Aufnahmeelemente ohne Gewinde für die Bolzen, insbesondere die Hülsen, können aus Aluminium bestehen.

Ein erfindungsgemäßes Verfahren zur Montage einer Hochvoltbatterie in einem Kraftfahrzeug mittels einer Befestigungsstruktur wie zuvor beschrieben kann vorsehen, dass die Hochvoltbatterie an die Unterseite des Schwellers herangebracht und so angeordnet wird, dass die Bolzen in den Aufnahmeelementen ohne Gewinde, insbesondere in den Hülsen, angeordnet sind, wobei danach das Batteriegehäuse mittels der Verschraubungen befestigt, nämlich an den Positionen der Verschraubungen verschraubt wird.

### Kurzbeschreibung der Zeichnungen

Die Erfindung wird im Folgenden beispielhaft unter Bezugnahme auf die Zeichnungen beschrieben.
- Fig. 1: ist eine Schnittansicht einer erfindungsgemäßen Befestigungsstruktur in einer ersten Ausführungsform im Bereich einer Verschraubung.
- Fig. 2: ist eine Schnittansicht einer erfindungsgemäßen Befestigungsstruktur in einer ersten Ausführungsform im Bereich eines Bolzens.
- Fig. 3: ist eine schematische Ansicht einer Anordnung von Verschraubungen und Bolzen in einer erfindungsgemäßen Befestigungsstruktur.
- Fig. 4: ist eine Schnittansicht einer erfindungsgemäßen Befestigungsstruktur in einer zweiten Ausführungsform im Bereich einer Verschraubung.
- Fig. 5: ist eine Schnittansicht einer erfindungsgemäßen Befestigungsstruktur in einer zweiten Ausführungsform im Bereich eines Bolzens.

### Detaillierte Beschreibung der Erfindung

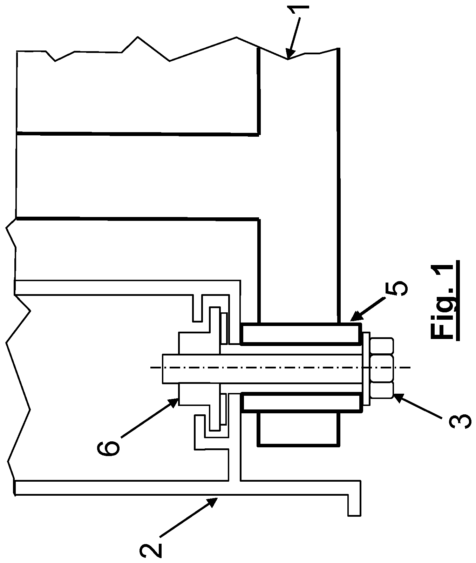

In Fig. 1 ist eine erfindungsgemäße Befestigungsstruktur in einer ersten Ausführungsform im Bereich einer Verschraubung 3 dargestellt. Das Batteriegehäuse 1 kann dabei aus Aluminium bestehen und an einem Schweller 2 befestigt sein, der ebenfalls aus Aluminium besteht.

Die Antriebsbatterie 1 kann in der Montage von unten mittels Schrauben 3 verschraubt werden. Üblicherweise werden zur Befestigung lediglich Schrauben in einer großen Anzahl verwendet.

Die Muttern, also Aufnahmeelemente mit Gewinde 6, können im Schweller 2 angeordnet sein. Im Batteriegehäuse 1 sind Hülsen, also Aufnahmeelemente ohne Gewinde 5, beispielsweise Einschweißhülsen aus Aluminium, eingeschweißt, durch die die Schrauben 3 durchgesteckt werden und die auch für die Möglichkeit eines Toleranzausgleichs in horizontaler Richtung sorgen.

Die Hülsen 5 stehen nach oben, zum Schweller 2 hin, etwas über den Batteriebefestigungsflansch des Batteriegehäuses 1 über. Das Batteriegehäuses 1 liegt dadurch nicht direkt auf dem Schweller 2 auf, sondern über die Hülse 5 wird somit auch ein verbesserter Toleranzausgleich in vertikaler Richtung, also in axialer Richtung der Hülse 5, gegenüber dem Schweller 2 ermöglicht.

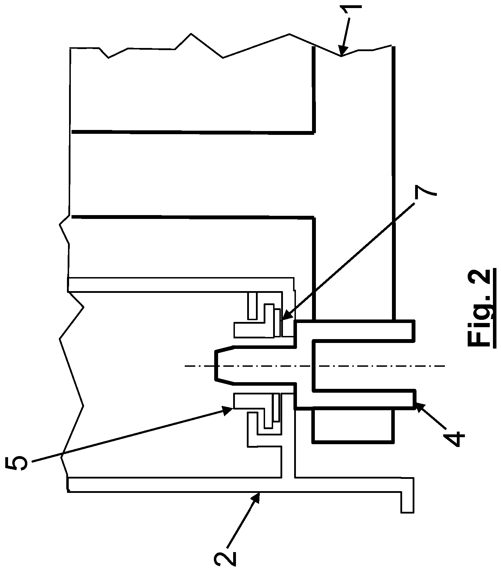

Fig. 2 ist eine Schnittansicht der erfindungsgemäßen Befestigungsstruktur gemäß Fig. 1, jedoch im Bereich eines Bolzens 4, der ein Zentrierbolzen aus Aluminium sein kann.

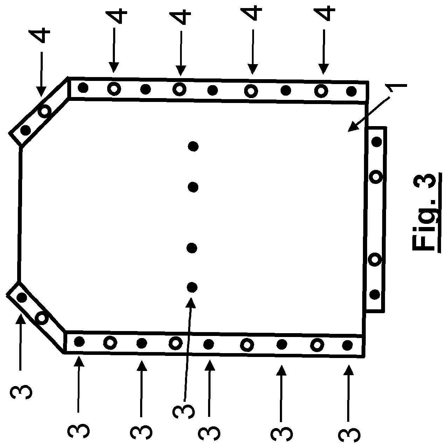

Wie in Fig. 3 schematisch dargestellt, kann bevorzugt jeder zweite Befestigungspunkt, oder jeder n-te Befestigungspunkt, einen Bolzen 4 statt einer Schraube 3 für die Befestigung verwenden. Insbesondere kann eine eingeschweißte Buchse aus Aluminium mit einem Zentrierbolzen als oberem Abschnitt als Bolzen 4 verwendet werden, der in ein Aufnahmeelement ohne Gewinde 5 eingeführt und nicht verschraubt wird (Fig. 2). Die Buchse des Bolzens 2 ist - ähnlich der Hülse 5 in Fig. 1 - überstehend über das Batteriegehäuse 1 ausgebildet, so dass ein Toleranzausgleich in vertikaler Richtung gegenüber dem Schweller 2 ermöglicht wird.

Das Aufnahmeelement ohne Gewinde 5 ist bevorzugt aus Stahl ausgebildet und ist bevorzugt auf einen Stahlstreifen 7 aufgeschweißt, der wiederum vorzugsweise in eine Nut im Schwellerprofil des Schwellers 2 eingeschoben ist.

Die Kraftübertragung kann hier nur in horizontaler Richtung erfolgen. In axialer Richtung ist der Bolzen 4 im Aufnahmeelement ohne Gewinde 5 nicht festgelegt also nicht befestigt.

Fig. 3 ist eine schematische Ansicht einer Anordnung von Verschraubungen 3 und Bolzen 4 in einer erfindungsgemäßen Befestigungsstruktur. Dargestellt sind somit die Befestigungspunkte einer Antriebsbatterie.

Üblicherweise sind Antriebsbatterien bzw. Hochvoltbatterien in einem Fahrzeugunterboden mit vielen einzelnen Verschraubungen 3 befestigt, also alle Befestigungspunkte als Verschraubungen 3 ausgebildet. Das erfordert jedoch viel Befestigungsmaterial und erhöhte Montagezeit.

Bei einem erfindungsgemäßen Einbau ist bevorzugt jeder zweite Befestigungspunkt ein Bolzen 4, der bei der Montage in einem Aufnahmeelement ohne Gewinde 5 eingeführt, aber nicht verschraubt wird. Dadurch wird Montagezeit und Befestigungsmaterial eingespart.

Wenn beispielsweise eine Antriebsbatterie mit n Befestigungselementen, zum Beispiel n=30, an sich verschraubt wäre, können zum Beispiel n/2 oder weniger als n/2, beispielsweise zwischen n/4 und n/2 der Befestigungspunkte durch Bolzen 4 ersetzt werden, zum Beispiel 12 Bolzen.

Die Bolzen 4 sind batterieseitig vormontiert und bedürfen keines zusätzlichen Montageaufwandes.

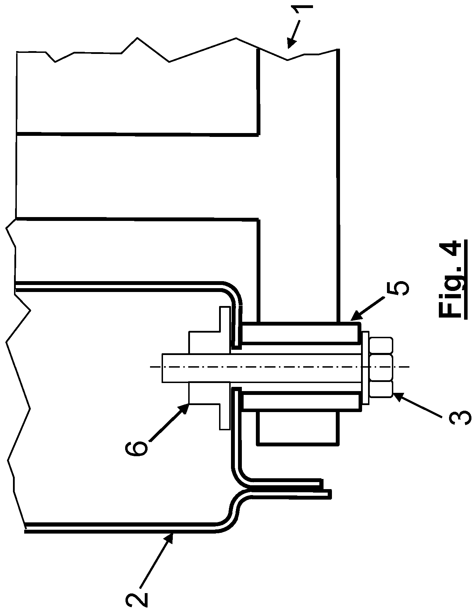

Fig. 4 ist eine Schnittansicht einer erfindungsgemäßen Befestigungsstruktur in einer zweiten Ausführungsform im Bereich einer Verschraubung 3.

Dargestellt ist ein Verbau eines Batteriegehäuses 1 aus Aluminium an einem Stahl Schweller 2.

Üblicherweise werden auch bei einem Stahl Schweller die Antriebsbatterien in der Montage von unten mittels Schrauben verschraubt.

In der Ausbildung gemäß Fig. 4 sind die Muttern bzw. Aufnahmeelemente mit Gewinde 6, zum Beispiel Schweißmuttern, im Schweller 2 angeordnet, und im Batteriegehäuse 1 sind Hülsen, insbesondere Einschweißhülsen aus Aluminium, als Aufnahmeelemente ohne Gewinde 5 eingeschweißt, durch die die Schrauben 3 durchgesteckt werden und die auch für den Toleranzausgleich sorgen.

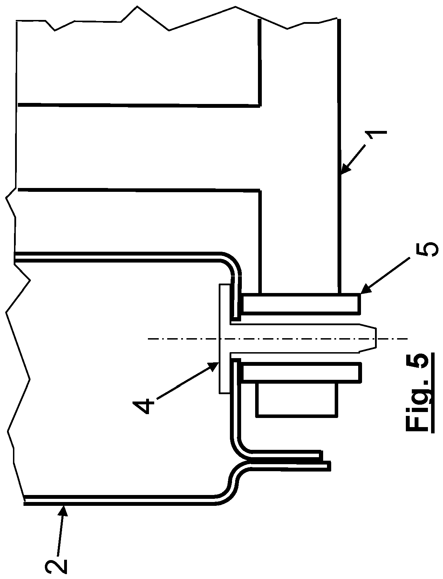

Fig. 5 zeigt diese Befestigungsstruktur im Bereich eines Bolzens 4. Es werden Zentrierbolzen aus Stahl zur Befestigung verwendet.

Beispielsweise jeder zweite Befestigungspunkt besteht aus einem Schweißbolzen 4 aus Stahl mit einer Zentrierspitze, und ist bevorzugt in einem Schweller 2 aus Stahl eingeschweißt

Die Zentrierspitze wird beim Zusammenbau in eine Hülse, insbesondere Einschweißhülse aus Aluminium, als Aufnahmeelement ohne Gewinde 5, im Batterierahmen des Batteriegehäuses 1 eingeführt, aber nicht verschraubt. Die Hülse besteht aus Aluminium und ist bereits ein gefügter Teil des Batteriegehäuses 1.

Die Kraftübertragung kann hier nur in horizontaler Richtung erfolgen.

### Bezugszeichenliste

- 1: Batteriegehäuse
- 2: Schweller
- 3: Verschraubung
- 4: Bolzen
- 5: Aufnahmeelement ohne Gewinde
- 6: Aufnahmeelement mit Gewinde
- 7: Stahlstreifen

## Patentansprüche

1. Befestigungsstruktur zur Befestigung einer Hochvoltbatterie in einem Kraftfahrzeug, umfassend ein Batteriegehäuse (1) der Hochvoltbatterie und zumindest einen Schweller (2) des Kraftfahrzeugs, wobei das Batteriegehäuse (1) mittels mehrerer Verschraubungen (3) am Schweller (2) des Kraftfahrzeuges befestigt ist,
**dadurch gekennzeichnet , dass** das Batteriegehäuse (1) zusätzlich mittels mehrerer unverschraubter, also axial nicht fixierter Bolzen (4) am Schweller (2) befestigt ist.

2. Befestigungsstruktur nach Anspruch 1,
**dadurch gekennzeichnet , dass** die Bolzen (4) mit dem Batteriegehäuse (1) oder mit dem Schweller (2) fest gefügt sind und am anderen Bauteil, also am Schweller (2) oder am Batteriegehäuse (1), jeweils abschnittsweise in einem Aufnahmeelement ohne Gewinde (5), insbesondere einer Hülse, angeordnet sind.

3. Befestigungsstruktur nach Anspruch 2,
**dadurch gekennzeichnet , dass** die Verschraubungen (3) jeweils abschnittsweise in einem Aufnahmeelement mit Gewinde (6), insbesondere einer Schraubenmutter, angeordnet und durch dieses Aufnahmeelement mit Gewinde (6) verschraubt sind, wobei das Aufnahmeelement mit Gewinde (6) bevorzugt im Inneren des Schwellers (2) angeordnet ist.

4. Befestigungsstruktur nach zumindest einem der vorhergehenden Ansprüche,
**dadurch gekennzeichnet , dass** die Verschraubungen (3) und/oder die Bolzen (4) jeweils abschnittsweise derart in Hülsen gelagert sind, dass sie einen Toleranzausgleich in einer Ebene normal auf die Hülse durchführen können.

5. Befestigungsstruktur nach zumindest einem der vorhergehenden Ansprüche,
**dadurch gekennzeichnet , dass** die Bolzen (4) abwechselnd mit den Verschraubungen (3) entlang des Schwellers (2) angeordnet sind, wobei bevorzugt die Verschraubungen (3) in einer Linie angeordnet sind und die Bolzen (4) jeweils abwechselnd zwischen den Befestigungspunkten in der selben Linie angeordnet sind.

6. Befestigungsstruktur nach zumindest einem der vorhergehenden Ansprüche,
**dadurch gekennzeichnet , dass** die Bolzen (4) am Batteriegehäuse (1) verschweißt sind und bevorzugt in Z-Richtung nach oben ausgerichtet sind.

7. Befestigungsstruktur nach Anspruch 6,
**dadurch gekennzeichnet , dass** der Schweller (2) aus Aluminium besteht und/oder dass die Bolzen (4) aus Aluminium bestehen.

8. Befestigungsstruktur nach Anspruch 2 und nach Anspruch 6 oder 7,
**dadurch gekennzeichnet , dass** die Aufnahmeelemente ohne Gewinde (5) für die Bolzen (4), insbesondere die Hülsen, aus Stahl bestehen, wobei bevorzugt mehrere Hülsen auf einem gemeinsamen Stahlstreifen (7) aufgeschweißt sind.

9. Befestigungsstruktur nach zumindest einem der Ansprüche 1 bis 5, **dadurch gekennzeichnet , dass** die Bolzen (4) am Schweller (2) verschweißt sind und bevorzugt in Z-Richtung nach unten ausgerichtet sind.

10. Befestigungsstruktur nach Anspruch 9,
**dadurch gekennzeichnet , dass** der Schweller (2) aus Stahl besteht und/oder dass die Bolzen (4) aus Stahl bestehen.

11. Befestigungsstruktur nach Anspruch 2 und nach Anspruch 9 oder 10,
**dadurch gekennzeichnet , dass** die Aufnahmeelemente ohne Gewinde (5) für die Bolzen (4), insbesondere die Hülsen, aus Aluminium bestehen.

12. Verfahren zur Montage einer Hochvoltbatterie in einem Kraftfahrzeug mittels einer Befestigungsstruktur nach zumindest einem der vorhergehenden Ansprüche,
**dadurch gekennzeichnet , dass** das Batteriegehäuse (1) der Hochvoltbatterie an die Unterseite des Schwellers (2) herangebracht und so angeordnet wird, dass die Bolzen (4) in den Aufnahmeelementen ohne Gewinde (5), insbesondere in den Hülsen, angeordnet sind, wobei danach das Batteriegehäuse (1) mittels der Verschraubungen (3) befestigt, nämlich verschraubt wird.
